# EUROPEAN PATENT SPECIFICATION

(11) **EP 1 680 336 B1**
(45) Date of publication and mention of the grant of the patent: **27.08.2008**
(21) Application number: 04795587.7
(22) Date of filing: 13.10.2004
(51) Int. Cl.: B65D 81/32, B32B 27/36

(54) **MULTI-COMPARTMENT PACKAGE HAVING TEMPERATURE DEPENDENT FRANGIBLE SEALS**
MEHRKAMMERVERPACKUNG MIT TEMPERATURABHÄNGIGEN ZERBRECHBAREN DICHTUNGEN
EMBALLAGE A PLUSIEURS COMPARTIMENTS PRESENTANT DES JOINTS CASSABLES EN FONCTION DE LA TEMPERATURE

(30) Priority: 14.10.2003 US 511436 P
(43) Date of publication of application: 19.07.2006
(73) Proprietor: E.I. DU PONT DE NEMOURS AND COMPANY, Wilmington DE 19898 (US)
(72) Inventor: KENDIG, Terrance, D., Newark, Delaware 19711 (US); KANE, James, P., Jr., Wilmington, Delaware 19805 (US)
(74) Representative: Heinemann, Monica
(86) International application number: PCT/US2004/034445
(87) International publication number: WO 2005/037679

(56) References cited:
- EP-A- 0 408 042
- EP-A- 0 648 601
- GB-A- 1 437 046
- US-A1- 2002 150 658
- US-A1- 2003 124 258

## Description

### Field of the Invention

This invention relates to a multi-compartment flexible package, to a film therefor, and to a product such as convenience meal comprising the package.

### Background of the Invention

it is often desirable to have products packaged together, yet separated, for later mixing. Such packaging is advantageous where the several products have differing physical characteristics or are incompatible during storage and are to be mixed shortly before consumption.

An example is a package or pouch to contain multiple foodstuffs separated by one or more seals. The foodstuffs require mixing or combining either sometime during or at the end of the cooking cycle. Various ingredients cannot be mixed together prior to cooking generally because they are incompatible in storage, or because qualities (e.g. flavor and texture) desired in the final cooked product cannot be achieved if the two or more ingredients are combined during preparation, or while in storage, or prior to cooking. Accordingly, the two or more ingredients should only be combined during cooking (for example, in an oven) or after they have been cooked. Also, it is typically inconvenient or impractical to require the user to provide the second or other ingredient independently after or during the cooking of the first ingredient, or the product itself, since the ingredients may not be readily available to the user, or it may not be practical or safe to interrupt the cooking cycle to add such additional ingredients. Example of such packages are disclose in US 4,596,713 and US 4,806,371.

US 2003/0124258 describes a microwave susceptible insulated packaging material including outer layers made of polyester, polyethylene or polypropylene and may include a sealant layer made of polyester copolymer, PVC or EVA copolymer.

US 2002/0150658 describes multilayer fins for packages comprising an outener layer that might be produced from a polyamide and a sealant layer selected from EVA, LDPE, LLDPE or an ionomer.

Packages with separated compartments relying on significant pressure increases or expansion of the foodstuff (e.g. popcorn) to rupture the compartments thereby releasing the contents are known. It is desirable to develop packages that do not rely on expansion of vapors or foodstuffs to break the film. The invention is directed to packages made of polymeric films comprising specific sealants, which soften and rupture under increased internal temperature and allow the contents of the compartments to release and combine. Increases in internal pressure have only a secondary effect on seal rupture.

Therefore, a multiple compartment package needs to be constructed so that it contains and preserves the foodstuffs during distribution and storage until it is ready for use, yet allows for mixing of the foodstuffs after processing, such as by heating.

### Summary of the Invention

The invention comprises a multilayer film that can be used for packaging and can comprise or be produced from at least one polymer layer and at least one sealant layer.

The invention also comprises multi-compartment package comprising first sheet of polymer film; second sheet of polymer film and at least one temperature-dependent frangible seal.

### Detailed Description of the Invention

In an embodiment, package can comprise or produced from a polymeric film comprising or produced from at least one polymer layer and a sealant layer comprising a polymeric material as defined in the claims. The polymer layer can comprises or is produced from polyamide, and comprises a further layer made of oriented PET. The sealant layer comprises or is produced from amorphous polyethylene terephthalate. The sealant layer is capable of forming a seal with strength greater than 1,500 g/inch (590 g/cm) and a temperature dependent frangible seal.

The polymer layer that can be used to produce the packages can be in flexible sheet or film form. The multilayer polymer film or sheet can involve at least three layers, including but not limited to, an outermost structural or abuse layer, an inner or outer barrier layer, and an innermost layer and optionally one or more adhesive or tie layers therebetween. Also, the innermost layer making contact with and compatible with the intended contents of the package (it is also referred to a pouch in this application) is capable of forming both the lock up perimeter seals (i.e., seal strengths typically greater than 1,500 g/inch or 590 g/cm) and internal frangible seal(s). Internal frangible seals have a peel strength ranging from about 400 to about 2500 g/inch (157-984 g/cm) of width and perimeter seals have a peel strength ranging from about 1500 to about 3500 g/inch (590-1378 g/cm) of width. Preferably, the difference in strength between an exterior seal and an internal frangible seal is at least 800 g/inch (315g/cm). Most preferably the innermost layer is also heat-sealable.

The outermost or structural or abuse layer comprises polyamide, preferably oriented polyamide (nylon), in combination with a layer made of oriented polyethylene terephthalate PET. This layer preferably is reverse-printable and unaffected by the sealing temperatures used to make the package and compartments. The package can be sealed through the entire thickness of the multilayer structure. The thickness of this layer can be selected to control the stiffness of the pouch, and may range from about 10 to about 60 µm, or about 10 to about 60 µm, or about 50 µm. The structure layers may be provided with graphic elements such as printing and embossing to provide information for the consumer and/or a pleasing appearance to the package. The particular multi-layered film used may depend upon the end use of the package. A preferred material for the strength layers is a biaxially oriented nylon from about 0.5 mil (12.7µm) to about 3 mils (76.2 µm)in thickness. For example, nylon used as an outer layer is preferably from about 1 (25.4 µm) to 3 mils (76.2 µm) thick. Nylon used as an inner layer in combination with another layer is preferably from about 0.5 to 1.5 mils (12.7 to 38.1 µm) thick.

The structural layer can also include one or more barrier layers, depending on which atmospheric conditions (oxygen, humidity, light, and the like) that potentially can affect the product inside the pouch. Barrier layers can be for example, and additional layer of oriented PET, polyvinylidene chloride (PVDC), ethylene vinyl alcohol (EVOH), nylon or biaxially oriented nylon, blends or composites of the same as well as related copolymers thereof. When the package is not intended for microwave heating, other barrier layers can also include metallized or silicon oxide-coated polymers. Barrier layer thickness may depend on the sensitivity of the product and the desired shelf life. In some applications, the functions of structure and barrier layers may be combined in a single layer of a suitable resin. For example, nylon is suitable for both structure and barrier functions.

The innermost layer of the package is the sealant. The sealant comprises amorphous PET. The sealant is selected to have minimum effect on taste or color of the contents, to be unaffected by the product, and to withstand sealing conditions (such as liquid droplets, grease, dust, or the like). The sealant can be a resin that can be bonded to itself (sealed) at temperatures substantially below the melting temperature of the outermost layer so that the outermost layer's appearance is not affected by the sealing process and does not stick to the jaws of the sealing bar. Sealant layers are typically from about 6 to about 100 µm thick, preferably from about 6 to about 25 µm. The sealant can form a compartment that ruptures once a particular temperature is reached, i.e. a temperature dependent frangible seal. To ensure performance of the frangible seals, the characteristics of the sealant remains constant and does not undergo changes in properties from the time the package is formed, filled and optionally chilled (i.e. frozen or refrigerated) until it is reheated.

Sealant can be applied across the entire web in the form of amorphous PET.

An amorphous PET copolyester heat-sealant can be derived from at least the following components: from about 10 to about 60 mole% terephthalic acid ("Monomer A"); from about 10 to about 60 mole % ethylene glycol ("Monomer B"); and from about 5 to about 60 mole % of a third monomer being a secondary di-acid ("Monomer C") and/or a secondary diol ("Monomer D"). Examples of Monomer C can include one or more succinic acid, adipic acid, azelaic acid, sebacic acid, 1,10-decanedicarboxylic acid, phthalic acid, isophthalic acid, dodecanedioic acid, and the like; preferred are such as azelaic, sebacic, and/or isophthalic acid. Examples of Monomer D can include one or more propylene glycol, methoxypolyalkylene glycol, neopentyl glycol, trimethylene glycol, tetramethylene glycol, hexamethylene glycol, diethylene glycol, and the like.

The strength of the seal can be manipulated by the temperature, dwell time and pressure of the heat seal bar, depending on the type and thickness of the sealant being applied. The width of the seal can be from about 0.1 (2.54 mm) to about 0.4 inches (1.02 mm) wide and external perimeter seals are preferably from about 0.5 (12.7 mm) to about 1 inch (25.4 mm), or greater, wide.

Choice of sealant and coating weight can affect the amount of product packaged, cooking time required and combinations of products in the package that are to be combined into a meal. For example, foodstuffs or sauces containing sugars typically heat at a faster rate than other foodstuffs. When these sugar-containing foodstuffs are combined with products that have a longer heating requirement, the correct sealant combination that can withstand the heating cycle and rupture at the correct time is accordingly made. A thicker layer of sealant may have the same softening point as a thinner layer, but increase time to rupture depending on the contents. Variations in seal width can also be used to effect seal rupture at desired times. At time of cooking, a thicker seal will soften and open at approximately the same temperature but with a longer time to rupture than a lighter seal layer of the same type.

The polymer layer comprises a layer of polyamide and a layer of oriented PET. The sealant layer comprises a layer of amorphous PET copolymer.

The invention also includes a multi-compartment package, which can be suitable for filling with materials which are to be stored in isolation from each other, comprising or produced from two sheets of polymer film material positioned in overlying relationship and permanently heat-sealed on the peripheral edges to form a package; and at least one temperature dependent frangible seal positioned at a predetermined location within the package to form separated compartments (of appropriate size depending upon the materials to be packaged) between the sheets of polymeric film. The polymer film is the same as disclosed above. The temperature-dependent frangible seal is the same as the sealant or sealant layer disclosed above.

The invention also includes a multiple-compartment package, which can be suitable for filling with materials which are to be stored in isolation from each other, comprising or produced from (a) a first sheet of polymeric film; (b) a second sheet of polymeric film superimposed on the first sheet of polymeric film wherein the first and second sheets of polymeric film are sealed to each other directly or indirectly through a third intervening polymeric film thus defining a sealed perimeter forming a pouch; wherein said pouch comprises at least one gusset; and (c) at least one temperature dependent frangible seal internal to the perimeter of the pouch wherein the frangible seal divides the pouch into separated compartments. The polymer film and the temperature-dependent frangible seal are the same as those disclosed above.

The invention also provides the aforesaid packages further comprising a foodstuff confined to one of said separated compartments and at least one other foodstuff confined to at least one other separated compartment.

The invention also includes a multiple-compartment package, which can be suitable for use in such packages comprising or produced from (a) at least one layer comprising polyamide, and a layer of oriented PET ; (b) a sealant layer comprising a polymeric material amorphous polyethylene terephthalate wherein said sealant layer is capable of forming a seal with strength greater than 590 g/cm (1,500 gram/inch) and also capable of forming a temperature dependent frangible seal; and optionally (c) at least one insulating layer.

The invention further includes a product such as a convenience meal comprising or produced from
(a) a multi-compartment package, comprising (1) two sheets of polymeric film material positioned in overlying relationship and permanently heat sealed on the peripheral edges to form a package; and (2) at least one temperature dependent frangible seal positioned at a predetermined location within the package to form separated compartments between said sheets of polymeric film;
(b) a foodstuff contained in one of said compartments; and
(c) at least one other foodstuff or ingredient contained in at least one other of said compartments; wherein said temperature frangible seals are capable of releasing on heating thereby combining (b) and (c), wherein the polymeric film and the seal are as defined above.

The multi-compartment package disclosed can include or be a pouch. The pouch.can be constructed with permanent perimeter seals that contain foodstuffs and temperature-dependent frangible interior seals that provide for initial separation of the contents yet can be easily ruptured when desired. When exposed to heat in, for example, microwave oven, conventional oven, convection oven or boiling water; the frangible seals can rupture, allowing the contents to mix together while the perimeter seals remain intact The package can then be opened and the foodstuffs can be consumed.

The interior frangible seal is designed to rupture when the product is heated to the softening point of the sealant (after the adjacent product reaches about 60 to about 100°C such as about 75-80°C), which causes the seal to fail. The result is the combination of the previously separated products in the package.

A package or pouch can be fabricated from a single film structure. The package configuration can be with or without gussets. The package can be made to stand up or lie flat during the cooking cycle. The packages of this invention can be made by, for example, forming a tube that can then be formed into a bag by heat-sealing across the bottom or folding a single sheet of polymeric material on itself and heat-sealing two of the sides to form open-ended packages. Forming and heat-sealing the separate compartments of the pouch, filling the compartments and closing the compartments (by, for example, heat sealing) can be done in a single processing line if desired. Alternatively, the open-ended multi-compartment package itself can be made in one operation and fed from a magazine for filling and closing the separate compartments in subsequent operations.

The films for packages of this invention comprises a combination of polyamide and oriented PET as structural layers and amorphous PET copolymer as the sealant layer. Such combinations can be used in microwave or conventional ovens. In some instances, it is convenient to heat-seal coat oriented PET with amorphous PET to provide a two-layer web for lamination to additional layers of polymeric material.

Polyamide and PET (heat sealable) combinations can provide directional tear properties in that a pre-notched package can be torn open in a straight line in either the machine direction or transverse directions. These tear properties allow for great flexibility in package configuration and design. Thus, the opening area to access the foodstuff after heating is not limited to a particular part (e.g. the top) of the pouch thereby allowing for locating a notch at the side of the desired area for opening. For example, one could place the notch slightly above the "bottom" compartment of a pouch. After the frangible seal(s) rupture and all the previously separated products are combined into the single compartment remaining, the notch is used to propagate the directional tearing feature across the package side seals to open the pouch. This provides for shortening of the pouch and the meal can be consumed directly from the bottom portion with the top being discarded; or the meal can be placed on a secondary dish if so desired.

Another embodiment of the invention employs forming a web of the packaging film with gussets to fabricate a stand-up pouch (SUP) by heat-sealing the built-in sealant. SUP pouches may be fabricated from two or three webs of film depending on design. Accordingly, a multiple-compartment package can comprise a first sheet of polymeric film; a second sheet of polymeric film superimposed on the first sheet of polymeric film wherein the first and second sheets of polymeric film are sealed to each other directly or indirectly through a third intervening polymeric film thus defining a sealed perimeter forming a pouch; wherein said pouch comprises at least one gusset; and at least one temperature dependent frangible seal internal to the perimeter of the pouch wherein the frangible seal divides the pouch into separated compartments, wherein the polymeric films and the seal are as defined above.

Package structure combinations can be used in any format, including preformed pouches, such as stand-up pouches as described; formed in line just before filling by horizontal/ form/fill/seal (HFFS) processes or formed in line just before filling by vertical/ form/fill/seal (VFFS) processes. Filling and seal bar combinations must be configured to the pouch type required, including factors such as desired package size, configuration and contents.

Correct material combination can give puncture resistance and/or barrier properties as needed to protect the packaged products. For example, frozen vegetables or pasta become very sharp and hard and can easily puncture polyethylene terephthalate (PET) or paper when not combined with suitable puncture-resistant layers. This problem can become apparent during the handling and distribution cycle. These packages can also be made with barrier properties for modified atmosphere packaging (MAP) applications with extended shelf life in ambient temperatures, refrigerated temperatures or frozen, then refrigerated temperatures where required. Proper selection of the structure and/or barrier layers is especially important for protection and performance of the package when the consumer is ready to use it.

Vent areas can be made anywhere on the package simply by providing a slit in the package face in the area of the desired compartment at the time of heating. Alternatively, a combination of materials including a non-venting sealant in combination with temperature dependent sealant materials (self venting) in a three-layer laminate structure may provide the desired venting effect. Self-venting is a desirable safety feature to minimize the occurrence of steam blast on opening the package. For example, sealant thickness and seal temperature can be designed to provide a vent (via rupture) once the foodstuff reaches 76.7°C (170 °F). Thus, the self-venting feature also serves as a temperature indicator to show that the food is heated to the proper temperature and is ready for consumption.

An example of a package disclosed, which uses heat to rupture the internal frangible seal and at the same time takes the food to the correct temperature where it can be safely consumed, is a package with pasta in one compartment and sauce in the other. The mass of the foodstuff packaged therein determine the length of time it takes to heat the foodstuff to the temperature required to soften and rupture the frangible seal while leaving the perimeter seal intact. This can be done in any pouch configuration. A one-web structure can be produced with a multitude of built-in functionality designed for any given application requiring mixing at elevated temperatures. The one-web structure provides the flexibility to tailor to the need by incorporation of a variety of sealant materials, seal configurations and seal strengths.

Other materials combined with a heat-seal coated PET can be made for either use. Packages can be fabricated to cook raw or semi-cooked foodstuffs or to reheat previously cooked products.

Multilayer structures combining nylon and PET copolymers can be adhered using an adhesive such as a polyester urethane. The adhesive is applied as a solution. Applying a solvent-based adhesive to the base films can depend on the proper choice of solvent(s) (e.g., preferably tetrahydrofuran) for the adhesive so that drying can be achieved at about 76.7°C, reducing residual solvent levels. The solvent-based adhesive can be applied to one side (or two sides) of the base sheet by means of any of the many coating techniques known to those of skill in the art. For , example, the film may be coated by roller (e.g. doctor roll) coating, spray coating, gravure coating, or slot coating, preferably roller or gravure coating using a solution coating process.

In another embodiment, a film and packages prepared therefrom comprise at least one thermal insulating layer. This thermal insulating layer may have a thermal resistance, as measured in units of insulation, or CLO, of 0.05 to 0.5. The CLO unit is defined as a unit of thermal resistance of a garment. The Sl unit of thermal resistance is the square-meter kelvin per watt (m²K/W) (See "Textile Terms and Definitions", Tenth Edition, The Textile Institute, (1995), pp. 66, 350). Thus, the range of thermal resistance in SI units of the thermal insulating layer of the present invention is 0.0077 to 0.077 m²K/W. Although CLO is defined in terms of a garment, this measurement can be used to describe the thermal resistance of any textile system, and is used herein to describe the thermal resistance of the thermal insulating layer of the present invention. CLO values depend on the material used for the insulating layer and its thickness. CLO values of packaging films made without the thermal insulating layer are below the lower end of the range (0.05 CLO, or 0.0077 m²K/W).

The insulated packaging material has enough loft, i.e., is thick enough (greater than 0.0075 inch (0.0190 cm)) to provide adequate insulation when used, for example, as an insulated pouch, but is thin enough to be flexible. The insulated packaging material of the present invention is printable, thereby enhancing its use as a packaging material.

The insulated packaging material of the present invention can comprise a thermal insulating layer having a thermal resistance disclosed above and laminated to a face material, wherein the insulated packaging material has a thickness in the range of 0.0075 inch (0.0190 cm) and 0.07 inch (0.1778 cm). In an embodiment, the insulating packaging material or film comprises a thermal insulating layer, such as a fiberfill batt, having a thermal insulating value in the range of 0.05 to 0.5 CLO that has been laminated to at least one, more preferably two, face materials that serve as structure and/or abuse layers. The insulating packaging film has a thickness of at least 0.0075 inch (0.0190 cm).

The thermal insulating layer comprises an organic thermoplastic fiber based material comprising polyester, polyethylene or polypropylene. In a preferred embodiment, the thermal insulating layer is a fiberfill batt that can comprise or produced from polyester. A fiberfill batt sold as THERMOLITE^{®} Active Original by E. I. du Pont de Nemours and Company (DuPont), Wilmington, Delaware can be used. The fiberfill batt used can have an areal weight in the range of 10 gm/m² to 200 gm/m², and a bulk density of less than 0.3 gm/cm³. Alternatively, the thermal insulating layer may comprise melt blown fibers, such as melt blown polyolefins, sold as THINSULATE^{®}, by 3M.

Many other variations of insulating material for the thermal insulating layer can be used with the present invention. For instance, the thermal insulating layer may comprise a foam. The foam may be polyurethane or polypropylene, or any other foam composition as known in the art. The thermal insulating layer may be alternatively made of an inorganic thermoplastic fiber based material comprising glass wool, borosilicate glass or rockwool.

Alternatively, the thermal insulating layer may comprise a knit fabric, made, for example from a tetrachannel or scalloped oval fiber, sold under the trademark COOLMAX^{®} by DuPont. The thermal insulating layer may also be a woven or fleece material. The insulating layer could also comprise some sort of nonwoven textile, such as felt, or a highloft nonwoven or needled nonwoven fabric.

During the manufacture of the polymeric film or sheet to be used in making the package, co-extrudable adhesives are optionally used between functional layers to adhere the layers to each other and to provide structural integrity. The films may be coextruded or laminated and may be adhered together with a coextruded tie layer such as ethylene/vinyl acetate copolymer, an ionomer, anhydride-grafted ethylene/vinyl acetate copolymer, low density polyethylene or linear low density polyethylene. Alternatively, lamination of the functional layers may be accomplished by incorporating between the layers an adhesive designed to withstand elevated temperatures. A typical film-to-film bond from lamination is made by adhering the films together with a thin layer of polyurethane coating on an adhesive laminator. Extrusion lamination or extrusion coating with an adhesive coextrusion tie layer resin at the bond interface can also accomplish this lamination. The multi-layered films are typically from 19.05-127µm (0.75 mils to 5.0 mils) thick, preferably about 38.1 to 76.2µm (1.5 to about 3.0 mils) thick.

Also, to provide additional thickness (if desired by the consumer for a particular application), bulk layers of polyolefin or chopped remnants of the multilayer film trimmed during pouch fabrication can be incorporated within the multilayer structure. It is contemplated that the sheet of polymeric film (i.e., the so-called "web stock") may be produced using any combinations of the processes generally known in the art, such as monolayer or multilayer casting, blowing film, extrusion lamination, and adhesive lamination and combinations thereof. Processing aids as generally known in the art, including by way of example but not limited thereto; slip agents (such as amide waxes), antiblocking agents (such as silica), and antioxidants (such as hindered phenols), may be incorporated in the web stock to facilitate either manufacture of the film or pouch formation. Pouches can be formed from web stock by either cutting and heat sealing separate pieces of web stock or by a combination of folding and heat sealing with cutting. As described herein, pouches are formed from two film sheets. The two film sheets may be two individual sheets of film. A single web of film may be folded onto itself to provide two overlying sheets, or a tube of film may be formed such that two overlying portions of the tube provide the equivalent of two sheets of film. The heat sealed perimeter of the pouch according to the instant invention can be achieved by superimposing the first and second sheets of polymeric film and then heat sealing each directly to the other or heat sealing them indirectly through the use of an intervening third polymeric film, again as generally known and practiced in the art. The frangible seals can be installed either during or after pouch formation. Pouch making equipment such as that made by Totani Corporation, Kyoto, Japan or Klockner Barlelt Co., Gordonsville, VA can be used.

An example multi-compartment package in the form of a generally flat rectangular pouch-like shape is formed of two juxtaposed sheets of thin, flexible, impervious polymeric material as described above. Particular embodiments of the present invention include those wherein the multi-compartment package has two or three compartments. A pouch can be formed by heat-sealing the peripheral edges of the juxtaposed polymer sheets, leaving openings for subsequent filling. A plurality of frangible seals formed between film layers by heat-sealing the layers together in predetermined locations within the pouch divides the pouch into separate compartments. The frangible seal(s) may be placed at any suitable location within the pouch and their positions will depend on such factors as the relative amounts of materials to be packaged and/or the mode of forming and filling the package. The compartments may be filled with foodstuffs and/or other ingredients through the above-mentioned openings in the perimeter seal. After filling each compartment, the openings of the package are heat sealed to permanently enclose each compartment and store the products separately from each other. Alternatively, the foodstuffs may be placed on a bottom sheet in locations suitable to be separated by internal seals and a second top sheet placed over the foodstuffs such that the perimeters of the top and bottom sheets are juxtaposed. The perimeter seal is formed by heat sealing at an appropriate temperature, pressure and time duration to form a lock-down seal. The internal frangible seals are formed by heat sealing at an appropriate temperature, pressure and time duration to separate the foodstuffs.

Functional structures can be produced in extrusion laminated or coextruded structures. Blown film versions are also possible depending on the demand and functionality required by the application.

A convenience meal is a foodstuff wherein at least some of the means for preparing and consuming (i.e. eating) the foodstuff are supplied with the foodstuff (for example, the consumer does not need to supply serving dishes and/or utensils in order to consume the meal).

Examples of convenience meals comprise combinations such as pasta and sauce, macaroni and cheese, meat and vegetables and the like, packaged to allow for easy preparation and consumption. Also an example of such a convenience meal is a combination of sauce, rice, chicken and vegetables in a three-compartment pouch. Additional examples of convenience meals include packages wherein a foodstuff is packaged together with another ingredient (e.g. a dry or dehydrated foodstuff is packaged together with a liquid such that the dry foodstuff and liquid are combined upon heating). A further example of such a convenience meal is a two-compartment package of dry oatmeal and water.

The following Examples are to be construed as illustrative, and not limiting the scope, of the invention.

### Examples

### Example 1

This example illustrates an adhesive lamination of nylon and polyester incorporating a polyester urethane adhesive designed to withstand elevated temperatures. The nylon outer layer provides toughness for puncture resistance and heat resistance to the film and also serves as an oxygen barrier and a possible print carrier. The amorphous polyester seal layer provides a temperature resistant perimeter seal, designed not to rupture by making a wider one-inch heat seal at a higher temperature. The same seal layer provides for frangible seals designed to rupture between compartments. In microwave applications the amorphous polyester sealant is efficient for an internal frangible seal if heat-sealed at a lower temperature using a 0.25" seal bar.

### Structural Components

Outer Structure Layer: nylon 6; 2 mil (50.8 µm) thickness available under the tradename Dartek^{®} B601 from DuPont of Canada/Liqui-Box.

Lamination Adhesive: solvent-based polyester urethane adhesive available under the tradename Adcote 503A/Catalyst F from the Morton division of Rohm and Haas.

Seal Layer: biaxially oriented polyester (OPTED coated with an amorphous PET copolymer (PET) heat seal layer; 0.5 mil (12.7 µm) available under the tradename Mylar^{®} OL13 from DuPont Teijin Films.

The structural components were combined as described below to prepare a multilayer film consisting of these layers (from outermost to innermost): nylon/adhesive/OPET/APET.

All surfaces in contact with the adhesive were corona treated to 48 dynes prior to lamination. Adhesive was first applied by rotogravure process to the nylon structure layer and dried at 170 °F (76.7°C). The polyester heat seal layer was brought into the lamination as the secondary web. Both the nylon structure web and the secondary polyester web were 24 inches (61 cm) wide and were laminated using a 23.5-inch (60 cm) back up roll for adhesive lay down optimization. The non-sealable side of the polyester was laminated to the structure layer using a hot nip process at a dynamic temperature of 170°F (76.7°C), leaving the heat-sealable APET surface exposed to air upon unwinding. The heat seal layer was kept away from the hot nip. The amorphous coated side of the polyester provided the high temperature seal where required for the perimeter seal and the frangible seal. The laminated nylon/polyester film then became the primary web for finishing the laminate into rollstock for fabrication into package stock.

Similar laminated film structures were prepared using 1.25 mil (31.8 µm)-thick nylon 6 film using similar procedures. The thickness of individual layers and the overall thickness of the laminate will be dictated by the material combinations and requirements for a specific package construction.

### Example 2

A three-compartment pouch was formed using the film of Example 1. Two portions of film stock were overlaid so that the respective heat seal layers (APET) of the film stock were facing and in contact. The overall dimensions of the pouch were 10.5 inches x 14 inches (26.7 cm x 35.7 cm). Internal frangible seals divided the pouch into three compartments: two compartments each about 4 inches x about 6 inches and a third compartment about 6 inches x about 8 inches (15.2 cm x 20.3 cm). The frangible seals were made using a Vertrod Impulse heat sealer to provide 0.125-inch (0.32 cm) seal width at 200°F (93.3°C) with one-second dwell and no pressure control. One small compartment was filled with 75 g of sauce, the second small compartment was filled with 185 g of white rice and the larger compartment was filled with 114 g of sliced chicken and 185 g of mixed vegetables. Perimeter seals were made using a Sentinel heat sealer to provide one-inch seal width at 350°F (176.7°C) wish 1.5-second dwell and 30 psi pressure. A notch was made in the perimeter seal adjacent to the rice compartment, approximately one inch from the frangible seal dividing the rice and chicken/vegetable compartments. This notch provided a guide for directional tear for opening the package after heating.

The filled and sealed pouch was then frozen.

### Example 3

This example illustrates heating packages of Example 2 such that the temperature dependent frangible seals release, allowing the previously separated contents to be mixed. Samples of the package of Example 2 were individually laid flat on the rotating carousel of a standard household microwave oven and heated at full power (800 watts) to reheat the foodstuffs therein.

Test 1: The frozen package was not vented. After 4 minutes and 43 seconds of heating, the frangible seals were ruptured. The seals forming sauce compartment broke first, since the sugars in the sauce provide for faster heating relative to the rice and chicken. After 7 minutes and 20 seconds, a portion of the perimeter seal ruptured, providing a vent for steam release. This venting also serves as a temperature gauge, providing an indicator for when the package contents reach at least 170°F (76.7°C).

The pouch was turned to an upright orientation, allowing the sauce and rice components to drop onto the chicken and vegetables. The pouch was opened by peeling horizontally across the notch for a straight and uniform directional tear. The temperature of the food was 175°F (79.4°C).

Test 2: The frozen package was vented prior to heating by cutting a small slit in the upper face of the package. After 5 minutes of heating, the frangible seals were ruptured. The sequence of seal rupture was the same as described in Test 1. After 7 minutes of heating, the pouch was opened as described in Test 1. The temperature of the food was 175°F (79.4°C).

### Comparative Example 4

This example illustrates a multilayer adhesive lamination incorporating an insulating layer. The insulating layer allowed the package to be used as a serving container following heating by retaining heat in the interior of the package while remaining relatively cool to the touch.

### Structural Components

Outer Structure Layer: 50 gauge biaxially OPET coated with an ethylene vinyl acetate (EVA) copolymer heat seal layer; 0.5 mil (12.7µm); available under the tradename Mylar^{®} RL33 from DuPont Teijin Films.

Insulating Layer: A fiberfill batt of the type sold by DuPont under the trademark THERMOLITE^{®} Active Original was used as the thermal insulating layer. The fiberfill batt had an areal weight of 100 g/m² at a specified thickness of 0.25 inch (0.63 cm), or a bulk density of 0.013 g/cm³. This batt was reduced in thickness, via needling and calendering, to about 0.030 inch (.0012 cm).

Inner Structure Layer: 50 gauge biaxially oriented OPET coated with an EVA copolymer heat seal layer; 0.5 mil (12.7 µm).

Lamination Adhesive: polyester urethane available under the tradename Adcote 503A/Catalyst F from the Morton division of Rohm and Haas, Philadelphia, Pennsylvania.

Seal Layer: biaxially OPET coated with an amorphous APET heat seal layer; 0.5 mil (12.7 µm) available under the tradename Mylar^{®} OL13.

The structural components are combined as described below to prepare a multilayer film consisting of the following layers (from outermost to innermost): OPET/EVA/insulated layer/EVA/OPET/adhesive/OPET/APET.

Using a laminating machine, the inner and outer structure layers were placed on opposite faces of the insulating batt such that the EVA heat seal layers were in contact with the batt and pressed together by heated nip rolls.

All surfaces to be in contact with the solvent-based adhesive were corona treated to 48 dynes prior to lamination. Adhesive was first applied by rotogravure process to the structural laminate and dried at 170°F (76.7°C). The polyester heat seal layer was brought into the lamination as the secondary web. Both the structural web and the secondary polyester web were 24 inches (61 cm) wide and were laminated using a 23.5-inch (60cm) back up roll for adhesive lay down optimization. The non-sealable side of the polyester was laminated to the structural laminate using a hot nip process at a dynamic temperature of 170°F (76.7°C), leaving the heat-sealable APET surface exposed to air upon unwinding.

### Comparative Example 5

A package of this invention was prepared from the film of Example 4 by overlaying two portions of the film so that their respective seal layers were facing and in contact and forming a flat pouch 7.0 inches (17.8 cm) in length and 5.5 inches (14 cm) in width. Perimeter seals were formed by applying 0.5 inch (1.27 cm)-wide metal heat seal bars to both faces of the package at 350°F (176.7°C) at 40 psi for four seconds. An internal frangible seal that divided the package into two compartments was formed by applying 0.125 inch (0.32 cm)-wide metal heat seal bars to both faces of the package at 200°F (93.3°C) at 40 psi for 1.25 seconds. One compartment, 4.25 inches x 3.0 inches (10.9 cm x 7.62 cm), was filled with 1.5 ounces dry oatmeal and the other compartment, 5.25 inches x 2.75 inches (13.3 cm x 7 cm), was filled with 70 ml of water. The openings of the compartments were sealed in a perimeter seal as described above to provide a self-contained convenience meal comprising oatmeal and water in a package suitable for heating in a microwave oven for consumption.

### Comparative Example 6

This example illustrates heating the package of Example 5 to rupture the temperature-dependent frangible seals, allowing the previously separated contents to be mixed.

The package was placed on the rotating carousel of a standard household microwave oven and heated at full power (800 watts) for 40 to 50 seconds. The internal frangible seal released, allowing the dry oatmeal and heated water to combine. Kneading the package for about twenty seconds provided complete mixing of the oatmeal and water.

## Claims

1. A multilayer film comprising or produced from a polymer layer, at least one sealant layer, and optionally at least one insulating layer;
wherein the polymer layer comprises or is produced from polyamide and further comprises a layer comprising or produced from oriented polyethylene terephthalate;
wherein the sealant layer comprises or is produced from amorphous polyethylene terephthalate copolymer, and wherein the sealant layer is capable of forming a seal with a strenght greater than 590 g/cm (1500 g/inch) and a temperature-dependent frangible seal.

2. The film of claim 1 wherein said layer comprising oriented polyethylene terephthalate is coated with the amorphous polyethylene terephthalate forming said sealant layer.

3. The film of claim 1, or 2 wherein the layer further comprises one or more barrier layers, including oriented polyethylene terephthalate, polyvinylidene chloride, ethylene vinyl alcohol, polyamide, biaxially oriented polyamide, blends or composites thereof, metallized or silicon oxide-coated polymers.

4. The film of claim 1, 2, or 3 wherein the film comprises, between then polymer layer and the sealant layer, the insulating layer which has a thermal resistant value of least 0.05 CLO (or 0.0077 m²K/W) and at least 0.0075 inch (0.0190 cm) thick.

5. A multiple-compartment package comprising or produced from first sheet of film, second sheet of film and at least one temperature-dependent frangible seal, wherein the second sheet is superimposed on the first sheet; the first and second sheets are sealed to each other directly or indirectly through a third intervening polymeric film thus defining a sealed perimeter forming a pouch; wherein the film is as recited in any of claims 1 to 4 and the seal is the sealant layer recited in any of claims 1 to 4, and the frangible seal is internal to the perimeter of the pouch dividing the pouch into separated compartments.

6. The package of claim 5 further comprising a foodstuff confined to one of the compartments and at least one other foodstuff confined to at least one other compartment.

7. A convenience meal comprising a package as recited in claim 5 or 6; a foodstuff or ingredient contained in one of the compartments; and at least one other foodstuff or ingredient contained in at least one other of the compartments; wherein the at least one temperature frangible seals are rupture on heating.

8. The convenience meal of claim 7 comprising dry oatmeal and water.

9. Use of a multilayer film for a compartmented pouch wherein the film is as recited in any of claims 1 to 4.

## Patentansprüche

1. Mehrlagige Folie, die eine Polymerlage aufweist oder aus dieser erzeugt ist, mindestens eine Siegelmittellage und wahlweise mindestens eine isolierende Lage;
wobei das Polymer ein Polyamid aufweist oder aus diesem erzeugt ist, und ferner eine Lage aufweist, die ein orientiertes Polyethylenterephthalat aufweist oder aus diesem erzeugt ist; wobei die Siegelmittellage amorphes Polyethylenterephthalat-Copolymer aufweist oder aus diesem erzeugt ist und wobei die Siegelmittellage in der Lage ist, eine Siegelung mit einer Festigkeit von mehr als 590 g/cm (1500 g/inch) und eine temperaturabhängig aufbrechbare Siegelung zu bilden.

2. Folie nach Anspruch 1, wobei die das orientierte Polyethylenterephthalat aufweisende Lage beschichtet ist mit dem amorphen Polyethylenterephthalat, welches die Siegelmittellage bildet.

3. Folie nach Anspruch 1 oder 2, wobei die Lage eine oder mehrere Sperrschichten aufweist, worin einbezogen sind: orientiertes Polyethylenterephthalat, Polyvinylidenchlorid, Ethylenvinylalkohol, Polyamid, biaxial orientiertes Polyamid, Blends oder Composites davon, metallisierte oder mit Silliciumoxid beschichtete Polymere.

4. Folie nach Anspruch 1, 2 oder 3, wobei die Folie zwischen der Polymerlage und der Siegelmittellage die isolierende Lage aufweist, deren Wert für den Wärmewiderstand mindestens 0,0077 m²K//W (oder 0,05 CLO) beträgt und die eine Dicke von mindestens 0,0190 cm (0,0075 inch) hat.

5. Mehrkammerverpackung, die aufweist oder erzeugt ist aus einem ersten flächigen Erzeugnis einer Folie, ein zweites flächiges Erzeugnis einer Folie und mindestens eine temperaturabhängig aufbrechbare Siegelung, wobei das zweite flächige Erzeugnis dem ersten flächigen Erzeugnis überlagert ist; wobei die ersten und zweiten flächigen Erzeugnisse miteinander direkt oder indirekt über eine dritte, dazwischen liegende Folie versiegelt sind und so eine versiegelte äußere Begrenzung festlegen, die einen Beutel bildet; wobei die Folie eine solche nach einem der Ansprüche 1 bis 4 ist und die Siegelung die Siegelmittellage nach einem der Ansprüche 1 bis 4 ist und sich die aufbrechbare Siegelung im Inneren der äußeren Begrenzung des Beutels befindet und den Beutel in getrennte Kammern unterteilt.

6. Verpackung nach Anspruch 5, ferner aufweisend ein Lebensmittel, das auf eine der Kammern begrenzt ist, sowie mindestens ein anderes Lebensmittel, das auf mindestens eine andere Kammer begrenzt ist.

7. Küchenfertiges Gericht, aufweisend eine Verpackung nach Anspruch 5 oder 6, ein in einer der Kammern enthaltendes Lebensmittel oder Zutat sowie mindestens ein in mindestens einer anderen Kammer enthaltendes Lebensmittel oder Zutat; wobei die mindestens eine der temperaturabhängig aufbrechbaren Siegelungen beim Erhitzen zerreißt.

8. Küchenfertiges Gericht nach Anspruch 7, aufweisend trockenes Hafermehl und Wasser.

9. Verwendung einer mehrlagigen Folie für einen in Kammern unterteilten Beutel, wobei die Folie eine Folie nach einem der Ansprüche 1 bis 4 ist.

## Revendications

1. Film multicouche comprenant ou fabriqué à partir d'une couche de polymère, au moins une couche de matériau d'étanchéité, et, à titre facultatif, au moins une couche isolante;
dans lequel la couche de polymère comprend ou est fabriquée à partir de polyamide et comprend en outre une couche comprenant ou fabriquée à partir de polyéthylène téréphtalate orienté; dans lequel la couche de matériau d'étanchéité comprend ou est fabriquée à partir de copolymère de polyéthylène téréphtalate amorphe, et dans lequel la couche de matériau d'étanchéité est capable de former un joint d'étanchéité d'une résistance de plus que 590 g/cm (1500 g/pouce) et un joint d'étanchéité frangible sous l'influence de la température.

2. Film selon la revendication 1, dans lequel ladite couche comprenant du polyéthylène téréphtalate orienté est recouverte avec le polyéthylène téréphtalate amorphe formant ladite couche de matériau d'étanchéité.

3. Film selon la revendication 1, ou 2, dans lequel la couche comprend en outre une ou plusieurs couches barrières, comprenant du polyéthylène téréphtalate orienté, du chlorure de polyvinylidène, de l'éthylène vinyle alcool, un polyamide, un polyamide biaxialement orienté, des mélanges ou des composés de ceux-ci; des polymères métallisés ou recouverts d'oxyde de silicium.

4. Film selon la revendication 1, 2, ou 3, dans lequel le film comprend, entre la couche de polymère et la couche de matériau d'étanchéité, la couche isolante qui a une valeur de résistance thermique d'au moins 0,05 CLO (ou 0,0077 m²K/W) et une épaisseur d'au moins 0,0075 pouces (0,0190 cm).

5. Paquet à compartiments multiples comprenant ou fabriqué à partir d'une première feuille de film, une deuxième feuille de film et au moins un joint d'étanchéité frangible sous l'effet de la température, dans lequel la deuxième feuille est superposée à la première feuille; les première et deuxième feuilles sont scellées l'une à l'autre directement ou indirectement par l'entremise d'un troisième film polymère intermédiaire définissant ainsi un périmètre étanche formant un sachet; dans lequel le film est selon l'une quelconque des revendications 1 à 4 et le joint d'étanchéité est la couche de matériau d'étanchéité selon l'une quelconque des revendications 1 à 4, et le joint d'étanchéité frangible est interne au périmètre du sachet, divisant le sachet en compartiments séparés.

6. Paquet selon la revendication 5 comprenant en outre des denrées alimentaires enfermées dans un des compartiments et au moins d'autres denrées alimentaires enfermées dans au moins un autre compartiment.

7. Repas tout préparé comprenant un paquet selon la revendication 5 ou 6; denrées alimentaires ou ingrédient contenu(es) dans un des compartiments; et au moins d'autres denrées alimentaires ou un autre ingrédient contenu(es) dans au moins un autre des compartiments; dans lequel le au moins un joint d'étanchéité frangible sous l'influence de la température se rompt par chauffage.

8. Repas tout préparé selon la revendication 7, comprenant des flocons d'avoine secs et de l'eau.

9. Utilisation d'un film multicouche pour un sachet compartimenté, où le film est selon l'une quelconque des revendications 1 à 4.
